# EUROPÄISCHE PATENTSCHRIFT

(11) **EP 3 724 612 B1**
(45) Veröffentlichungstag und Bekanntmachung des Hinweises auf die Patenterteilung: **18.01.2023**
(21) Anmeldenummer: 18803653.7
(22) Anmeldetag: 14.11.2018
(51) Int. Cl.: G06T 7/62, G01F 23/296

(54) **VERFAHREN ZUR VEREINFACHTEN INBETRIEBNAHME EINES FELDGERÄTS**
METHOD FOR STARTING UP A FIELD DEVICE IN A SIMPLIFIED MANNER
PROCÉDÉ POUR SIMPLIFIER LA MISE EN SERVICE D'UN APPAREIL DE TERRAIN

(30) Priorität: 15.12.2017 DE 102017130137
(43) Veröffentlichungstag der Anmeldung: 21.10.2020
(73) Patentinhaber: Endress+Hauser SE+Co. KG, 79689 Maulburg (DE)
(72) Erfinder: HAAG, Tanja, 79650 Schopfheim (DE); PALATINI, Florian, 79692 Kleines Wiesental (DE); BIRGEL, Eric, 79650 Schopfheim (DE)
(74) Vertreter: Koslowski, Christine Adelheid
(86) Internationale Anmeldenummer: PCT/EP2018/081148
(87) Internationale Veröffentlichungsnummer: WO 2019/115116

(56) Entgegenhaltungen:
- WO-A1-2007/025879
- WO-A1-2007/066166
- WO-A1-2010/015455
- WO-A1-2016/187376
- WO-A2-2016/005121
- US-A- 6 167 464
- US-A1- 2013 321 245
- US-A1- 2015 254 499

## Beschreibung

Die Erfindung betrifft ein Verfahren zur Inbetriebnahme eines an einer Komponente, insbesondere an einem Behälter, einer Messstelle angebrachten Feldgeräts der Automatisierungstechnik mittels einer Bedieneinheit, wobei die Bedieneinheit eine Anzeigeeinheit und eine Kamera aufweist.

Aus dem Stand der Technik sind bereits Feldgeräte bekannt geworden, die in industriellen Anlagen zum Einsatz kommen. In der Automatisierungstechnik ebenso wie in der Fertigungsautomatisierung werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Zur Füllstandsmessung von Füllgütern in Behältern haben sich berührungslose Messverfahren etabliert, da sie robust und wartungsarm sind. Dabei werden unter dem Begriff "Behälter" im Rahmen der Erfindung auch nicht-abgeschlossene Behältnisse, wie beispielsweise Becken, Seen oder fließende Gewässer verstanden. Ein weiterer Vorteil berührungsloser Messverfahren besteht in der Fähigkeit, den Füllstand quasi kontinuierlich messen zu können. Im Bereich der kontinuierlichen Füllstandsmessung werden daher vorwiegend Ultraschall- oder Radar-basierte Messverfahren eingesetzt (im Kontext dieser Patentanmeldung beziehen sich der Begriff Ultraschall auf SchallWellen in einem Frequenzbereich zwischen 14 KHz und 1 GHz; Der Begriff "Radar" auf Signale bzw. elektromagnetische Wellen mit Frequenzen zwischen 0.03 GHz und 300 GHz).

Im Fall von Radar-basierter Füllstandsmessung bildet das Pulslaufzeit-Messprinzip ein etabliertes Messprinzip. Hierbei werden Ultraschall- oder Mikrowellenpulse als Messsignale zyklisch in Richtung des Füllgutes ausgesandt und die Laufzeit bis zum Empfang des entsprechenden Echo-Pulses gemessen. Auf Basis dieses Messprinzips können Füllstandsmessgeräte mit vergleichsweise geringem schaltungstechnischem Aufwand realisiert werden. Ein Radar-basiertes Füllstandsmessgerät, welches nach dem Puls-Laufzeit-Verfahren arbeitet, ist beispielsweise in der Offenlegungsschrift DE 10 2012 104 858 A1 beschrieben. Das Ultraschall-basierte Pendant ist unter anderem in der Patentschrift EP 1480021 B1 gezeigt.

Sofern eine komplexere Schaltungstechnik in Kauf genommen werden kann, bietet sich zur Radarbasierten Füllstandsmessung auch FMCW ("*Frequency Modulated Continuous Wave*") als Messprinzip an. Bezüglich eines typischen Aufbaus von FMCW-basierten Füllstandsmessgeräten sei exemplarisch auf die Offenlegungsschrift DE 10 2013 108 490 A1 verwiesen.

Das Messprinzip von FMCW- Radar basierten Entfernungsmessverfahren beruht darauf, ein Radar-basiertes Messsignal kontinuierlich mit modulierter Frequenz auszusenden. Dabei liegt die Frequenz des Messsignals in einem festgelegten Frequenzband im Bereich einer standarisierten Mittenfrequenz. Kennzeichnend für FMCW ist hierbei, dass die Sende-Frequenz nicht konstant ist, sondern sich periodisch innerhalb eines definierten Frequenzbandes ändert. Die zeitliche Änderung ist hierbei standardmäßig linear und weist eine Sägezahn- beziehungsweise Dreiecks-Form auf. Eine Sinus-förmige Änderung kann prinzipiell jedoch auch verwendet werden. Im Gegensatz zum Pulslaufzeit-verfahren wird die Entfernung bzw. der Füllstand bei Implementierung des FMCW-Verfahrens auf Basis der instantanen Frequenzdifferenz zwischen dem aktuell empfangenen, reflektierten Messsignal und dem momentan ausgesendeten Messsignal bestimmt.

Bei jedem der oben genannten Messprinzipien (Ultraschall, Pulsradar, und FMCW) wird zur Ermittlung des Füllstandes anhand des empfangenen, reflektierten Messsignals eine entsprechende Messkurve aufgenommen. Bei Verwendung von Ultraschall entspricht die Messkurve grundsätzlich direkt dem zeitlichen Amplitudenverlauf des reflektierten Messsignals. Im Falle des Pulsradarbasierten Verfahrens wird die Messkurve aufgrund der hohen Pulsfrequenz hingegen durch Unterabtastung des reflektierten Messsignals erstellt. Dadurch bildet die Messkurve das eigentliche, reflektierte Messsignal zeitgedehnt ab. Bei Implementierung des FMCW-Verfahrens wird die Messkurve durch Mischen des momentan gesendeten Messsignals mit dem reflektierten Messsignal erstellt. In allen Fällen spiegelt die Messkurve jedoch die Amplitude des reflektierten Messsignals in Abhängigkeit der Messdistanz wieder.

Eine Vielzahl solcher Feldgeräte wird von der Endress+Hauser-Gruppe produziert und vertrieben.

Feldgeräte, die in eine neue Applikation einer Prozessanlage integriert werden, oder Austauschfeldgeräte, die ein veraltetes oder defektes Feldgerät einer Applikation ersetzen, müssen im Zuge der Inbetriebnahme spezifisch auf die jeweilige Applikation des Feldgeräts in der Messstelle angepasst werden. Dafür werden diese Feldgeräte während oder nach der Fertigung konfiguriert und parametriert. Die Konfiguration beschreibt zum einen die hardwareseitige Konfiguration, beispielsweise das Flanschmaterial eines Durchflussmessgerätes, als auch die softwareseitige Konfiguration. Unter Parametrierung versteht man das Definieren und Festlegen von Parametern, mit deren Hilfe der Betrieb des Feldgerätes auf die jeweiligen Merkmale der Applikation, beispielsweise das Messmedium, eingestellt wird.

Abhängig vom Feldgerätetyp kann ein Feldgerät mehrere hunderte verschiedene Parameter aufweisen, denen im Zuge der Inbetriebnahme Parameterwerte zugewiesen werden. Heutzutage wird die Parametrierung eines Feldgeräts mittels Softwaretools vorgenommen. Die Eingaben der Parameterwerte sind ausschließlich textbasiert möglich und setzen ein technisches Verständnis seitens des Bedieners voraus.

Im Falle eines Füllstandmessgeräts ist zu dessen Inbetriebnahme die Verwendung eines sogenannten Hüllkurvenmoduls obligatorisch. Hierbei wird ein Diagramm verwendet, welches eine oben genannte Messkurve anzeigt. Mittels der Messkurve werden neben dem eigentlichen Reflexionssignal am Füllgut allerdings auch Störreflektionen dargestellt. Seitens des Bedieners muss das eigentliche Reflexionssignal von den Signalen, welche durch die Störreflektionen erzeugt werden, identifiziert werden. Auch hierfür ist technisches Verständnis seitens des Bedieners erforderlich.

Ausgehend von dieser Problematik liegt der Erfindung die Aufgabe zugrunde, ein Verfahren vorzustellen, welches auch technisch unerfahrenen Bedienern eine zuverlässige Inbetriebnahme von Feldgeräten erlaubt.

Die Aufgabe wird durch ein Verfahren zur Inbetriebnahme eines an einer Komponente, insbesondere an einem Behälter, einer Messstelle angebrachten Feldgeräts der Automatisierungstechnik mittels einer Bedieneinheit gelöst, wobei die Bedieneinheit eine Anzeigeeinheit und eine Kamera aufweist, umfassend:
- Identifizieren des Feldgeräts mittels der Bedieneinheit;
- Ermitteln zumindest eines einzustellenden Parameters des Feldgeräts;
- Visualisieren von zumindest einem einzustellenden Parameter mittels der

Anzeigeeinheit, wobei auf der Anzeigeeinheit das Sichtfeld eines Bedieners dargestellt wird, wobei die Anzeigeeinheit als Sichtfeld des Bedieners ein von der Kamera erfasstes, ständig aktualisiertes Bild visualisiert; wobei der Parameter als zumindest ein virtuelles Symbol dargestellt wird, welches virtuelle Symbol das auf der Anzeigeeinheit dargestellte

Bild zumindest teilweise überlagert, wobei das virtuelle Symbol das Sichtfeld an derjenigen Stelle überlagert, welche die Funktion des zumindest einen einzustellenden Parameters betrifft;
- Auswählen von zumindest einem vorgegebenen Parameterwert, bzw. Eingeben von zumindest einem Parameterwert;
- Bestätigen des ausgewählten, bzw. eingegebenen Parameterwertes und
- Übermitteln des bestätigten Parameterwertes an das Feldgerät und Speichern des Parameterwertes in dem Feldgerät.

Eine Bedieneinheit ist in US 2013/321245 A1 offenbart, wobei die Bedieneinheit eine Anzeigeeinheit, die eines Sichtfeld des Bedieners darstellt aufweist, und wobei Parametern des Feldgeräts auf der Anzeigeeinheit dargestellte Sichtfeld visualisiert sind.

Mittels des erfindungsgemäßen Verfahrens wird der Bediener auf einfache Art und Weise bei der Inbetriebnahme eines Feldgeräts unterstützt. Nach der Identifikation des Feldgeräts werden automatisch die einzustellenden Parameter des Feldgeräts abgerufen. Hierfür ist auf der Bedieneinheit eine Datenbank vorgesehen, welche die einzustellenden Parameter einer Vielzahl von Feldgerätetypen beinhaltet. Alternativ ist die Bedieneinheit mit einer externen Datenbank in Verbindung, insbesondere einer cloudfähigen Datenbank mittels einer Internetverbindung, welche die einzustellenden Parameter einer Vielzahl von Feldgeräten vorhält.

Die Anzeigeeinheit der Bedieneinheit zeigt das aktuelle Sichtfeld des Bedieners. Im alternativen erfindungsgemäßen Fall handelt es sich bei der Anzeigeeinheit um ein kombiniertes transparentes Glas mit einem Projektor. Der Bediener blickt durch das Glas hindurch. Die durch das Glas betrachtete Umgebung wird als Sichtfeld bezeichnet. Der Projektor ist dazu ausgestaltet, eine Projektion auf das Glas zu werfen, welche der Bediener wahrnimmt. Über das aktuelle Sichtfeld des Bedieners werden so virtuelle Symbole gelegt. Diese Symbole entsprechen den einzustellenden Parametern. Die Kamera der Bedieneinheit erfasst gleichzeitig die Umgebung und "sieht" das selbe Sichtfeld wie der Bediener. Auf diese Art und Weise kann die korrekte Position der Symbole auf dem Sichtfeld ermittelt werden. Es ist vorgesehen, dass die Symbole das Bild an derjenigen Stelle überlagern, welche der Funktion/dem Zweck des aktuell einzustellenden Parameters betrifft. Wird beispielweise der Typ des Füllgutes oder des Messmediums eingestellt, so befindet sich das dementsprechende Symbole auf dem Bild über dem Füllgut, bzw. dem Messmedium. Das Verständnis bezüglich des Zwecks eines jeden Parameters wird dem Bediener gegenüber der bisherigen textbasierten Eingabe verständlicher. Die Symbole beinhalten eine Eingabemaske, in welche der Parameterwert für den jeweiligen Parameter eingegeben werden kann. Die Art und Weise, wie die Eingabe der Parameterwerte in die Eingabemaske der Symbole erfolgt, ist von dem Typ der Bedieneinheit abhängig. Ändert sich die Position der Kamera bezüglich der Komponente der Messstelle, so verändert sich das auf der Anzeigeeinheit visualisierte Bild dementsprechend. Die Symbole verbleiben allerdings auf der zugewiesenen Position der Komponente und "wandern" dementsprechend abhängig von der Verschiebung der Komponente auf dem Bild mit. Nach erfolgter Eingabe der Parameterwerte eines oder aller einzustellenden Parameter betätigt der Bediener die Eingaben. Die eingegebenen Parameterwerte werden nun von der Bedieneinheit derart an das Feldgerät übermittelt, dass das Feldgerät mit den eingegebenen Parameterwerten parametriert wird.

Die Identifikation des Feldgeräts kann auf verschiedene Arten erfolgen. Im einfachsten Fall wählt der Bediener den Feldgerätetyp des Feldgeräts aus einer Liste aus, welche ihm auf der Anzeigeeinheit der Bedieneinheit angezeigt wird. Anschließend werden die einzustellenden Parameter von der Datenbank abgerufen. Alternativ werden Identifikationsdaten aus dem Feldgerät ausgelesen, insbesondere mittels einer Funkverbindung, insbesondere Bluetooth oder Wi-Fi, zwischen Feldgerät und Bedieneinheit. Eine weitere Möglichkeit stellt das optische Identifizieren des Feldgeräts dar. Hierfür wird das Feldgerät mittels der Kamera erfasst und auf definierte Geometrien untersucht, welche mit einer Datenbank abgeglichen werden. Ein optisches Identifizieren des Feldgeräts umfasst auch das Auslesen eines optischen Codes, beispielsweise eines Barcodes oder eines QR-Codes, welcher an dem Feldgerät angebracht ist.

Feldgeräte, welche im Zusammenhang mit dem erfindungsgemäßen Verfahren erwähnt werden, sind bereits im einleitenden Teil der Beschreibung beispielhaft erwähnt worden. Das erfindungsgemäße Verfahren eignet sich für alle Arten und Feldgerätetypen und ist nicht etwa auf Füllstandmessgeräte beschränkt.

Gemäß einer vorteilhaften Ausgestaltung des erfindungsgemäßen Verfahrens ist vorgesehen, dass die Anzeigeeinheit als Sichtfeld des Bedieners ein von der Kamera erfasstes, ständig aktualisiertes Bild visualisiert, und wobei das virtuelle Symbol das von der Anzeigeeinheit angezeigte Bild zumindest teilweise überlagert. Die Anzeigeeinheit der Bedieneinheit zeigt das Livebild, welches von der Kamera aufgenommen wird. Der Bediener sollte die Bedieneinheit derart auf die Messstelle richten, dass die Komponente der Messstelle von der Kamera erfasst wird. Über das aktuelle Livebild der Kamera werden virtuelle Symbole gelegt. Diese Methode eignet sich für Bedieneinheiten, welche kein transparentes Glas aufweisen, sondern ein herkömmliches Display als Anzeigeeinheit besitzen.

Gemäß einer vorteilhaften Ausgestaltung des erfindungsgemäßen Verfahrens ist vorgesehen, dass eine Referenzgeometrie mittels der Kamera erfasst wird, wobei die Referenzgeometrie in zumindest einer Dimension eine definierte Länge aufweist, wobei anhand der Referenzgeometrie ein dreidimensionales Polygonnetz erstellt wird. Aus der Literatur ist das SLAM-Problem ("Simultaneous Localization and Mapping") bekannt, welches ein Problem der Robotik bezeichnet, bei dem ein mobiler Roboter gleichzeitig eine Karte seiner Umgebung erstellen und seine Position innerhalb dieser Karte schätzen muss. Eine Lösung für dieses Problem stellt das Berechnen eines dreidimensionalen Polygonnetzes mithilfe einer Referenzgeometrie dar.

Die Kamera wird hierfür entweder um die Referenzgeometrie bewegt oder der Blickwinkel von der Kamera auf die Referenzgeometrie wird mittels kleiner Bewegungen minimal variiert. Mittels einer Stereokamera kann auf diesen ersten Schritt verzichtet werden. Alternativ kann eine Tiefenkamera verwendet werden, welche diesen Schritt selbstständig übernimmt. Anschließend wird ein dreidimensionales Abbild der Geometrie in Form eines Polygonnetzes erstellt. Die definierte Länge von zumindest einer der Dimensionen der Referenzgeometrie wird der Bedieneinheit mitgeteilt, wodurch die Bedieneinheit einen definierten Abstand zwischen den Maschen des Polygonnetzes berechnet. Durch Erweitern, bzw. Aufspannen des Polygonnetzes kann die Raumgröße und die Lage der Bedieneinheit im dreidimensionalen Raum bestimmt werden.

In einer bevorzugten Weiterbildung des erfindungsgemäßen Verfahrens ist vorgesehen, dass das dreidimensionale Polygonnetz verwendet wird, um von der Kamera erfasste Objekte zu vermessen und einen Maßstab für die von der Kamera erfassten, auf dem Sichtfeld angezeigten Objekte zu definieren. Da der Bedieneinheit die Maschenweite des dreidimensionalen Polygonnetzes bekannt ist, können beliebige Geometrien erfasst und Vermessen werden. Dieses Verfahren weist eine sehr hohe Genauigkeit auf. Im Zusammenhang mit dem erfindungsgemäßen Verfahren werden insbesondere die Dimensionen des Feldgeräts und/oder der Komponente der Messstelle ausgemessen. Auf dem Sichtfeld auf der Anzeige können nun beispielsweise die Größenangaben der Komponente angezeigt werden und/oder eine Maßstabslänge permanent eingeblendet werden, welche sich dynamisch ändert, wenn der Bediener die Kamera auf die Komponente hinzubewegt, bzw. von der Komponente wegbewegt, bzw. die Zoomfunktion der Kamera verwendet.

Gemäß einer vorteilhaften Weiterbildung des erfindungsgemäßen Verfahrens ist vorgesehen, dass als Komponente der Messstelle ein Behälter verwendet wird, wobei als Feldgerät ein Füllstandmessgerät, welches nach einem berührungslosen Messverfahren, insbesondere nach dem Ultraschall-Messprinzip, nach dem Pulslaufzeit-Messprinzip, oder nach dem FMCW-Messprinzip arbeitet, verwendet wird, welches zum Bestimmen eines Füllstandes von einem Füllgut in dem Behälter dient. Diese Typen von Feldgeräten wurden bereits im einleitenden Teil der Beschreibung definiert. Anstelle von Füllstandmessgeräten ist jeglicher weitere Typ von Feldgeräten verwendbar. Die folgenden Beispiele beziehen sich jedoch auf Füllstandmessgeräte und typische für Füllstandmessgeräte einzustellende Parameter. Bei Verwendung von anderen Feldgerätetypen sind diese Parameter ggf. nicht verfügbar und andere Parametertypen einzustellen.

Eine vorteilhafte Ausgestaltung des erfindungsgemäßen Verfahrens sieht vor, dass als einzustellender Parameter ein Maximalwert einer Füllhöhe des Füllgutes in dem Behälter, ein Minimalwert einer Füllhöhe des Füllgutes in dem Behälter und/oder ein Überlaufschutzwert einer Füllhöhe des Füllgutes in dem Behälter eingestellt wird. Als Überlaufschutzwert wird dabei diejenige Füllhöhe des Füllgutes bezeichnet, welche im Behälter vorhanden sein darf, ohne dass bei weiterem Erhöhen des Füllgutes eine Gefahr, beispielsweise durch Überlaufen des Behälters verursacht, entsteht. Der Minimalwert, bzw. der Maximalwert der Füllhöhe ist weniger kritisch und kann nach Wünschen des Bedieners, bzw. nach den Anforderungen der Messstelle definiert werden.

Gemäß einer besonders bevorzugten Ausgestaltung des erfindungsgemäßen Verfahrens ist vorgesehen, dass in dem Fall, dass sich der Behälter auf dem von der Kamera erfassten Sichtfeld befindet, der Behälter anhand des dreidimensionalen Polygonnetzes vermessen wird und eine Skalierung des Behälters auf Sichtfeld Bild bestimmt wird, und wobei das Symbol des Parameters auf dem Sichtfeld neben dem Behälter angeordnet wird. Insbesondere ist vorgesehen, dass eine Längsachse des Behälters bestimmt wird. Die Symbole werden insbesondere parallel zur Längsachse neben dem Behälter angeordnet. Insbesondere ist der auf dem Sichtfeld befindliche Behälter nicht von den virtuellen Symbolen überlagert. Die Kamera erfasst die Geometrie des Behälters vollständig und bestimmt den Boden des Behälters. Ggf. wird der Bediener aufgefordert, den Boden des Behälters auf dem Sichtfeld zu markieren. Der Boden des Behälters wird als Füllstandhöhe "Null" definiert. Die Bedieneinheit definiert, dass die Oberfläche des Füllgutes bei Befüllen des Behälters entlang der Längsachse des Behälters ansteigt.

In einer vorteilhaften Ausgestaltung des erfindungsgemäßen Verfahrens ist vorgesehen, dass der Parameterwert für den Parameter numerisch eingegeben wird, wobei das Symbol des Parameters derart auf dem Sichtfeld neben dem Behälter angeordnet wird, dass es sich auf einer jeweils dem numerischen Parameterwert entsprechenden Füllhöhe neben dem Behälter befindet. Da die Lage des Bodens des Behälters definiert ist und die Geometrie des Tanks mittels des dreidimensionalen Polygonnetzes vermessen ist, kann die die Lage des Füllstandspiegels bei jeder eingegebenen Füllstandhöhe berechnet, bzw. simuliert werden. Das jeweilige Symbol des Parameters, beispielsweise der Maximalhöhe der Füllhöhe des Füllgutes wird entsprechend auf dem Sichtfeld angeordnet, so dass sich auf der jeweiligen eingegebenen Füllstandhöhe befindet. Für den Bediener ist hierdurch auch ersichtlich, ob ein eingegebener Parameterwert überhaupt plausibel ist, bzw. ob der eingegebene Parameterwert der Vorstellung des Bedieners entspricht.

In einer vorteilhaften, alternativen Ausgestaltung des erfindungsgemäßen Verfahrens ist vorgesehen, dass das Symbol manuell neben auf dem Sichtfeld neben dem Behälter angeordnet wird, wobei für das Symbol entsprechend der Skalierung des Behälters eine Füllhöhe ermittelt wird und wobei eine Umrechnung der Füllhöhe in einen numerischen Parameterwert erfolgt. Dies ist der "umgekehrte" Weg zur oben beschriebenen Ausgestaltung: Anhand der Platzierung des Symbols auf dem Sichtfeld berechnet die Bedieneinheit die zu der Lage des Symbols korrespondierenden Füllhöhe als numerischen Wert in Bezug zu dem Boden des Behälters. Dem Bediener wird der numerische Wert anschließend angezeigt. Für den Bediener ist hierdurch auch ersichtlich, ob ein eingegebener Parameterwert überhaupt plausibel ist, bzw. ob der eingegebene Parameterwert der Vorstellung des Bedieners entspricht.

Beide Methoden stellen eine einfache Möglichkeit dar, die Grenzwerte für die Füllstandsmessung einzugeben. Die Eingabe und Verifikation der Parameterwerte ist für den Bediener im Gegensatz zu der bisher bekannten textbasierten Eingabe wesentlich intuitiver.

Gemäß einer vorteilhaften Weiterbildung des erfindungsgemäßen Verfahrens ist vorgesehen, dass eine Messkurve des Füllstandmessgeräts aufgenommen wird, welche Messkurve eine Amplitude des reflektierten Messsignals in Abhängigkeit einer Messdistanz widerspiegelt, wobei die Messkurve zumindest zwei Maxima aufweist, welche sich auf einer ersten und einer weiten Füllhöhe befinden. Eine solche Messkurve ist im Detail im einleitenden Teil der Beschreibung beschrieben. Die Maxima der Messkurven entsprechen hierbei Reflexionen des von dem Füllstandmessgerät emittierten Messsignals. Üblicherweise wird das Messsignal von der Oberfläche des Füllgutes und von dem Boden des Behälters reflektiert. Jedoch können auch weitere, sich im Behälter befindliche Objekte, wie beispielsweise ein Rührwerk, zu einer Reflexion des Messsignals führen.

In einer vorteilhaften Ausgestaltung des erfindungsgemäßen Verfahrens ist vorgesehen, dass die erste und die zweite Füllhöhe als Symbol auf dem Sichtfeld angezeigt werden, wobei die Symbole auf der entsprechenden ersten und zweiten Füllhöhe maßstabsgerecht an dem auf dem Sichtfeld visualisierten Behälter angeordnet werden. Für den Bediener ist dadurch ohne weiteres erkennbar, auf welche Position im Behälter sich die Maxima befinden, bzw. an welcher Position im Tank sich Reflexionen des Messsignals ereignet haben.

In einer bevorzugten Ausgestaltung des erfindungsgemäßen Verfahrens ist vorgesehen, dass als Parameter ein Füllgutmaximum der Messkurve eingestellt wird, wobei als Füllgutmaximum diejenige der beiden Füllhöhen ausgewählt wird, welche der tatsächlichen aktuellen Höhe des Füllgutes entspricht. Im Falle von zwei Maximas ist beispielsweise für den Bediener leicht ersichtlich, welches Maximum der Oberfläche des Füllgutes entspricht. So befindet sich eines der beiden Maximas üblicherweise auf Höhe des Behälterbodens. Das zweite Maximum befindet sich oberhalb des Gehäusebodens. Der Bediener sollte zur Erleichterung der korrekten Auswahl des Maximums jedoch im Voraus darauf achten, beispielsweise mittels einer Sichtkontrolle, dass das Füllgut derart vorab in den Behälter eingefüllt wird, dass sich die aktuelle Füllhöhe ausreichend von Gegenständen, beispielsweise Rührwerken, entfernt liegt, welche das Messsignal reflektieren können.

Gemäß einer ersten Variante des erfindungsgemäßen Verfahrens wird als Bedieneinheit eine Datenbrille verwendet. Eine solche Datenbrille besitzt einen Bildschirm, welcher das von der Kamera aufgenommene Sichtfeld anzeigt. Für den Bediener erscheint es, als ob das von der Kamera erfasste Sichtfeld von den eigenen Augen erfasst wird. Alternativ weist eine Datenbrille einen Projektor auf, welche ein Bild auf eine Scheibe, bzw. ein Glas der Brille projiziert. Der Bediener sieht die Umgebung durch die Scheibe der Brille. Gleichzeitig erfasst eine Kamera der Brille die Umgebung in dem Maße, wie die Augen des Bedieners die Umgebung erfassen. Anstatt das gesamte von der Kamera aufgenommene Sichtfeld der Umgebung auf die Scheibe zu projizieren, werden lediglich die virtuellen Symbole auf die Scheibe projiziert. Ein Beispiel für solch eine Datenbrille letzteren Typs, welche für das erfindungsgemäße Verfahren geeignet ist, stellt die "Hololens" von Microsoft dar.

Gemäß einer bevorzugten Ausgestaltung der ersten Variante des erfindungsgemäßen Verfahrens ist vorgesehen, dass die Verfahrensschritte des Auswählens, bzw. Eingebens des Parameterwertes und/oder des Bestätigens des ausgewählten, bzw. eingegebenen Parameterwerts mittels einer Gestensteuerung erfolgen. Der Bediener zeigt beispielsweise mit seiner Hand auf ein Symbol, bzw. führt seine Hand auf das Symbol. Die Kamera erfasst dabei die Lage der Hand. Durch definierte Bewegungen/Gesten mit der Hand kann ein Parameterwert anschließend verringert/erhöht werden, ein Parameterwert bestätigt werden und/oder ein Symbol verschoben werden.

Gemäß einer zweiten Variante des erfindungsgemäßen Verfahrens wird als Bedieneinheit ein mobiles Endgerät verwendet. Hierfür eignet sich beispielsweise ein Smartphone oder ein Tablet, aber auch ein Laptop, welcher eine Webcam aufweist, welche es erlaubt, die Umgebung in der entgegengesetzten Richtung zu dem Bediener zu erfassen. Die Auswahl eines Symbols, das Erhöhen/Verringern eines Parameterwerts, das Bestätigen eines Parameterwerts und/oder das Verschieben eines Symbols erfolgt mittels der Eingabemittel des mobilen Endgeräts, beispielsweise mittels Berührungen des Touchscreens, mittels Tasteneingaben und/oder mittels Eingaben via Maus.

In einer vorteilhaften Ausgestaltung des erfindungsgemäßen Verfahrens ist vorgesehen, dass der bestätigte Parameterwert mittels einer Funkverbindung, insbesondere Bluetooth, an das Feldgerät übermittelt wird. Alternativ zu Bluetooth kann eine beliebige Funkverbindung verwendet werden, beispielsweise Wi-Fi oder Zigbee. Alternativ können die Parameterwerte indirekt an das Feldgerät übermittelt werden. Hierfür werden die Parameterwerte nicht auf direktem Wege an das Feldgerät gesendet, sondern werden von der Bedieneinheit an eine zu dem Feldgerät verschiedene Instanz übermittelt, beispielsweise an die Leitstelle der Anlage, an ein anderes Feldgerät, an eine weitere Bedieneinheit, etc. Von dieser Instanz werden die Parameterwerte dann an das Feldgerät übermittelt.

Die Erfindung wird anhand der nachfolgenden Figuren näher erläutert. Es zeigen

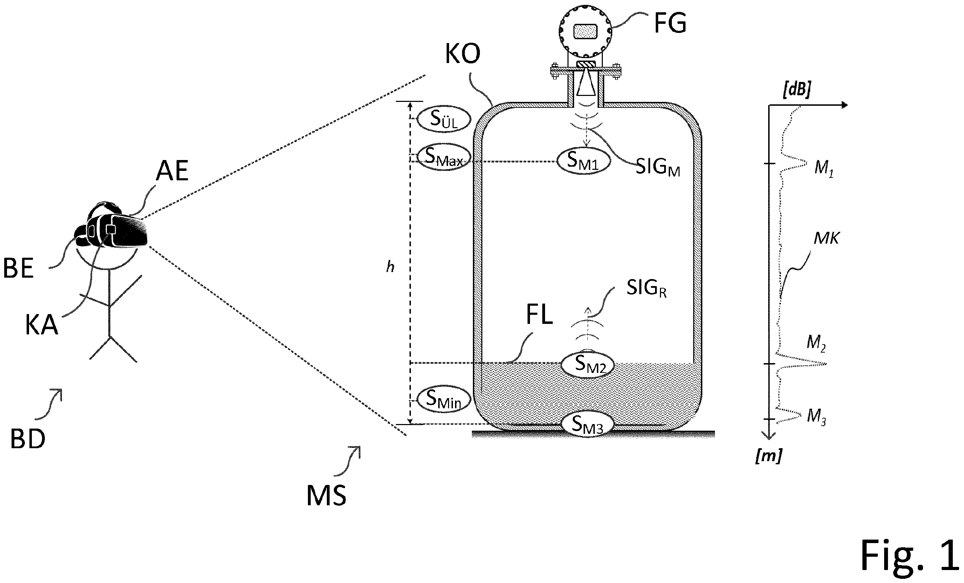

Fig. 1: ein Ausführungsbeispiel des erfindungsgemäßen Verfahrens.

In Fig. 1 ist eine Messstelle MS einer Anlage der Prozessautomatisierung gezeigt. Die Messstelle MS besteht aus einem Behälter KO, in welchem ein Füllgut FL gelagert ist. Bei dem Füllgut FL handelt es sich um fluidartiges Medium oder um ein Schüttgut. Zur Überwachung der Füllhöhe h des Füllgutes FL in dem Behälter KO wird ein Feldgerät FG in Form eines berührlosen Füllstandmessgerätes an dem Behälter KO angebracht. Die Füllhöhe h des Füllgutes FL wird dadurch gemessen, dass das Feldgerät ein Messsignal MS emittiert. Das Messsignal MS wird an der Oberfläche des Füllgutes FL reflektiert. Das reflektierte Signal RS wird von dem Feldgerät FG empfangen und bearbeitet. Anhand Kenngrößen des reflektierten Signals RS, beispielsweise anhand der Dauer zwischen dem Emittieren des Messsignals MS und dem Empfang des reflektierten Signals RS kann auf die Füllhöhe h des Füllgutes FL geschlossen werden.

Zur Inbetriebnahme muss das Feldgerät FG parametriert werden. Herkömmlicherweise wird die Parametrierung, also die Zuweisung von Parameterwerten zu spezifischen Parametern, des Feldgeräts FG textbasiert mittels einer Bedieneinheit BE statt. Hierfür ist jedoch mitunter ein tiefgehendes technisches Verständnis seitens des Bedieners BD erforderlich.

Das erfindungsgemäße Verfahren, welches im Folgenden näher erläutert wird, bietet eine Erleichterung der Inbetriebnahme des Feldgeräts FG auch für weniger erfahrene Anwender/Bediener BD.

Nach dem Einbauvorgang des Feldgeräts FG an dem Behälter KO verbindet sich der Bediener BD mit seiner Bedieneinheit BE, hier in Form einer Datenbrille, mit dem Feldgerät FG. Die Verbindung erfolgt drahtlos, beispielweise über Bluetooth (LE) oder Wi-Fi. Anschließend liest die Bedieneinheit BE die Identifikationsdaten des Feldgeräts FG aus und gleicht diese mit einer Datenbank ab. Die Datenbank ist insbesondere über das Internet erreichbar. Zu diesem Zweck besitzt die Bedieneinheit BE ein Mobilfunkmodul, über welches die Bedieneinheit die Datenbank kontaktieren kann. Nach erfolgtem Abgleich übersendet die Datenbank die einzustellenden Parameter des Feldgeräts FG an die Bedieneinheit. Die Bedieneinheit BE leitet den Bediener BE anschließend Schritt für Schritt durch die Parametrierung des Feldgeräts FG:
In einem ersten Schritt werden die Grenzwerte des Feldgeräts FG eingestellt. Hierfür müssen den Parametern "Maximalwert der Füllhöhe h", "Minimalwert der Füllhöhe h" und/oder "Überlaufschutzwert der Füllhöhe h" messstellenspezifisch Parameterwerte zugewiesen werden.

Nach Ermittlung dieser einzustellenden Parameter zeigt die Bedieneinheit AE diese als Symbole S_{Max}, S_{Min}, S_{ÜL} auf der Anzeigeeinheit AE der Bedieneinheit BE an. Hierfür erfasst die Bedieneinheit BE mittels einer Kamera KA die Messstelle MS. Das Livebild der Kamera KA wird auf der Anzeigeeinheit AE als Bild angezeigt. Die Bedieneinheit ist mittels der Kamera in der Lage, den Behälter KO der Messstelle zu vermessen und die Dimensionen des Behälters KO anzuzeigen. Es kann dabei vorgesehen sein, die Skala der Füllhöhe h wird auf dem Bild zu visualisieren, insbesondere neben dem Behälter KO, parallel zur Längsachse des Behälters KO.

Zum Anzeigen der Symbole S_{Max}, S_{Min}, S_{ÜL} werden diese virtuell über das von der Kamera KA aufgenommene Bild gelegt, neben der Skala der Füllhöhe h des Behälters KO. Zum Einstellen der Parameterwerter dieser Parameter kann der Bediener BD zwei verschiedene Methoden verwenden:
Im ersten Fall wählt der Bediener BD per Gestensteuerung eines des beiden Symbole S_{Max}, S_{Min}, S_{ÜL aus}. Daraufhin öffnet sich eine Eingabemaske. Der Bediener BD gibt daraufhin einen Wert der Füllhöhe für den Parameter ein. Das jeweilige Symbol S_{Max}, S_{Min}, S_{ÜL} wird anschließend auf die zum eingegebenen Wert korrespondierende Höhe auf der Skala verschoben.

Im zweiten Fall verschiebt der Bediener BD die Symbole S_{Max}, S_{Min}, S_{ÜL} auf die gewünschte Füllhöhe h auf der Skala. Der korrespondierende numerische Wert wird daraufhin anschließend ermittelt.

Nach Eingabe aller Parameterwerte für die besagten Parameter bestätigt der Bediener BD die Eingabe. Daraufhin werden die Parameterwerte an das Feldgerät FG übermittelt. Dieses speichert die Parameterwerte in den entsprechenden Registern der Parameter.

Im nächsten Schritt der Parametrierung wird die Messkurve MK des Feldgeräts FG analysiert. Hierfür erstellt das Feldgerät FG in einem ersten Schritt eine Messkurve MK. Die Messkurve zeigt die Höhe des reflektierten Signals SIG_{R} über die Füllhöhe h in dem Behälter KO. Reflektiert ein Objekt einen Teil des Messsignals SIG_{M}, so wird dies in der Messkurve MK als Maximum M1, M2, M3 dargestellt. Um die korrekte Füllhöhe h des Füllgutes FL zu bestimmen, muss dem Feldgerät FG mitgeteilt werden, welches der Maxima M1, M2, M3 die Reflexion des Messsignals SIG_{M} an der Oberfläche des Füllgutes FL darstellt.

Dazu bekommt die Bedieneinheit BE die aktuell gemessene Messkurve MK des Feldgeräts FG übermittelt und überprüft diese auf Maxima M1, M2, M3. Diese Maxima M1, M2, M3 werden als Symbole S_{M1}, S_{M2}, S_{M3} dargestellt, welche derart das Bild der Anzeigeeinheit AE überlagern, dass die Symbole S_{M1}, S_{M2}, S_{M3} auf der entsprechenden Füllhöhe, bei welcher die Maxima M1, M2, M3 auftreten, auf dem Behälter KO angeordnet sind.

Insbesondere ist vorgesehen, dass die Messkurve MK ständig aktualisiert wird, so dass die Symbole S_{M1}, S_{M2}, S_{M3} ständig auf der aktuellen Position der Maxima M1, M2, M3 angeordnet sind. Per Gestensteuerung wählt der Bediener BD das korrekte Maximum M2 aus, welche die Reflexion des Messsignals SIG_{M} an der Oberfläche des Füllgutes FL darstellt. Der Bediener BD muss hierfür ungefähr wissen, bis zu welcher Füllhöhe h das Füllgut FL aktuell in dem Behälter KO eingefüllt ist.

Im vorliegenden Falle stellt das Maximum M1 eine Reflexion des Messsignals SIG_{M} an einer Rohrkomponente im Behälter KO dar. Maximum M3 stellt eine Reflexion des Messsignals SIG_{M} an dem Boden des Behälters KO dar. Maximum M2 stellt den korrekte Parameterwert dar, welches das Feldgerät FG zur Auswertung der Messkurve und damit zur korrekten Ermittlung der aktuellen Füllhöhe des Füllgutes benötigt.

Nach Bestätigung des ausgewählten Maximums M1, M2, M3 wird dieser Parameterwert an das Feldgerät FG übermittelt. Dieses speichert die Parameterwerte in dem entsprechenden Register des Parameters.

Anschließend können auf ähnliche Art und Weise verschiedene weitere Parameter des Feldgeräts FG mittels der Bedieneinheit BE parametriert werden.

Alternativ zu einer Datenbrille kann als Bedieneinheit BE auch ein mobiles Endgerät verwendet werden. Hierfür eignet sich beispielsweise ein Smartphone oder ein Tablet, aber auch ein Laptop mit einer Webcam. Die Auswahl eines Symbols S_{Max}, S_{Min}, S_{ÜL}, S_{M1}, S_{M2}, S_{M3}, das Erhöhen/Verringern eines Parameterwerts, das Bestätigen eines Parameterwerts und/oder das Verschieben eines Symbols S_{Max}, S_{Min}, S_{ÜL}, S_{M1}, S_{M2}, S_{M3} erfolgt mittels der Eingabemittel des mobilen Endgeräts, beispielsweise mittels Berührungen des Touchscreens, mittels Tasteneingaben und/oder mittels Eingaben via Maus.

Das erfindungsgemäße Verfahren eignet sich für alle Arten und Feldgerätetypen und ist nicht etwa auf Füllstandmessgeräte beschränkt. Die in Fig. 1 dargestellten Beispiele beziehen sich jedoch auf Füllstandmessgeräte und präsentieren typische für Füllstandmessgeräte einzustellende Parameter. Bei Verwendung von anderen Feldgerätetypen sind diese Parameter ggf. nicht verfügbar und andere Parametertypen einzustellen.

### Bezugszeichenliste

- AE: Anzeigeeinheit
- BD: Bediener
- BE: Bedieneinheit
- FG: Feldgerät
- FL: Füllgut
- h: Füllhöhe des Füllgutes
- KA: Kamera
- KO: Komponente einer Messstelle
- MK: Messkurve
- MS: Messstelle
- S_{Max}, S_{Min}, S_{ÜL}, S_{M1}, S_{M2}, S_{M3}: virtuelle Symbole
- SIG_{M}: Messsignal
- SIG_{R}: reflektiertes Signal

## Patentansprüche

1. Verfahren zur Inbetriebnahme eines an einer Komponente (KO), insbesondere an einem Behälter, einer Messstelle (MS) angebrachten Feldgeräts (FG) der Automatisierungstechnik mittels einer Bedieneinheit (BE), wobei die Bedieneinheit (BE) eine Anzeigeeinheit (AE) und eine Kamera (KA) aufweist, umfassend:
- Identifizieren des Feldgeräts (FG) mittels der Bedieneinheit (BE),
- Ermitteln zumindest eines einzustellenden Parameters des Feldgeräts (FG),
- Visualisieren von dem zumindest einen einzustellenden Parameter mittels der Anzeigeeinheit (AE), wobei auf der Anzeigeeinheit (AE) das Sichtfeld eines Bedieners (BD) dargestellt wird, wobei die Anzeigeeinheit (BE) als Sichtfeld des Bedieners (BD) ein von der Kamera (KA) erfasstes, ständig aktualisiertes Bild visualisiert, wobei der Parameter als zumindest ein virtuelles Symbol (S_{Max}, S_{Min}, S_{M1}, S_{M2}, S_{M3}) dargestellt wird, welches virtuelle Symbol (S_{Max}, S_{Min}, S_{M1}, S_{M2}, S_{M3}) das auf der Anzeigeeinheit (AE) dargestellte Bild zumindest teilweise überlagert, wobei das virtuelle Symbol (S_{Max}, S_{Min}, S_{M1}, S_{M2}, S_{M3}) das Sichtfeld an derjenigen Stelle überlagert, welche die Funktion des zumindest einen einzustellenden Parameters betrifft;
- Auswählen von zumindest einem vorgegebenen Parameterwert, bzw. Eingeben von zumindest einem Parameterwert;
- Bestätigen des ausgewählten, bzw. eingegebenen Parameterwertes und
- Übermitteln des bestätigten Parameterwertes an das Feldgerät (FG) und Speichern des Parameterwertes in dem Feldgerät (FG).

2. Verfahren nach Anspruch 1, wobei eine Referenzgeometrie mittels der Kamera (KA) erfasst wird, wobei die Referenzgeometrie in zumindest einer Dimension eine definierte Länge aufweist, wobei anhand der Referenzgeometrie ein dreidimensionales Polygonnetz erstellt wird.

3. Verfahren nach Anspruch 2, wobei das dreidimensionale Polygonnetz verwendet wird, um von der Kamera (KA) erfasste Objekte (KO, FG) zu vermessen und einen Maßstab für die von der Kamera (KA) erfassten, auf dem Bild angezeigten Objekte (KO, FG) zu definieren.

4. Verfahren nach zumindest einem Ansprüche 2 oder 3, wobei als Komponente (KO) der Messstelle (MS) ein Behälter verwendet wird, wobei als Feldgerät (FG) ein Füllstandsmessgerät, welches nach einem berührungslosen Messverfahren, insbesondere nach dem Ultraschall-Messprinzip, nach dem Pulslaufzeit-Messprinzip, oder nach dem FMCW-Messprinzip arbeitet, verwendet wird, welches zum Bestimmen einer Füllhöhe (h) von einem Füllgut (FL) in dem Behälter (KO) dient.

5. Verfahren nach Anspruch 4, wobei als einzustellender Parameter ein Maximalwert einer Füllhöhe (h) des Füllgutes (FL) in dem Behälter (KO), ein Minimalwert einer Füllhöhe (h) des Füllgutes (FL) in dem Behälter (KO) und/oder ein Überlaufschutzwert einer Füllhöhe (h) des Füllgutes (FL) in dem Behälter (KO) eingestellt wird.

6. Verfahren nach Anspruch 4 oder 5, wobei in dem Fall, dass sich der Behälter (KO) auf dem Sichtfeld des Bedieners (BD) befindet, der Behälter (KO) anhand des dreidimensionalen Polygonnetzes vermessen wird und eine Skalierung des Behälters (KO) auf dem Sichtfeld bestimmt wird, und wobei das Symbol (S_{ÜL}, S_{Max}, S_{Min}) des Parameters auf dem Sichtfeld neben dem Behälter (KO) angeordnet wird.

7. Verfahren nach Anspruch 6, wobei der Parameterwert für den Parameter numerisch eingegeben wird, wobei das Symbol (S_{ÜL}, S_{Max}, S_{Min}) des Parameters derart auf dem Sichtfeld neben dem Behälter (KO) angeordnet wird, dass es sich auf einer jeweils dem numerischen Parameterwert entsprechenden Füllhöhe (h) neben dem Behälter (KO) befindet.

8. Verfahren nach Anspruch 6, wobei das Symbol (S_{ÜL}, S_{Max}, S_{Min}) manuell neben auf dem Sichtfeld neben dem Behälter (KO) angeordnet wird, wobei für das Symbol (S_{ÜL}, S_{Max}, S_{Min}) entsprechend der Skalierung des Behälters (KO) eine Füllhöhe (h) ermittelt wird und wobei eine Umrechnung der Füllhöhe (h) in einen numerischen Parameterwert erfolgt.

9. Verfahren nach Anspruch 3, wobei eine Messkurve (MK) des Füllstandsmessgeräts aufgenommen wird, welche Messkurve (MK) eine Amplitude des reflektierten Messsignals (SIG_{R}) in Abhängigkeit einer Messdistanz widerspiegelt, wobei die Messkurve (MK) zumindest zwei Maxima aufweist (M1, M2, M3), welche sich auf einer ersten und einer weiteren Füllhöhe (h) befinden.

10. Verfahren nach Anspruch 9, wobei die erste und die zweite Füllhöhe als Symbol (S_{M1}, S_{M2}, S_{M3}) auf dem Sichtfeld angezeigt werden, wobei die Symbole (S_{M1}, S_{M2}, S_{M3}) auf der entsprechenden ersten und zweiten Füllhöhe (h) maßstabsgerecht an dem auf dem Sichtfeld visualisierten Behälter (KO) angeordnet werden.

11. Verfahren nach Anspruch 10, wobei als Parameter ein Füllgutmaximum der Messkurve (MK) eingestellt wird, wobei als Füllgutmaximum diejenige der beiden Füllhöhen (h) ausgewählt wird, welche der tatsächlichen aktuellen Höhe (h) des Füllgutes (FL) entspricht.

12. Verfahren nach zumindest einem der vorherigen Ansprüche, wobei als Bedieneinheit (BE) eine Datenbrille verwendet wird.

13. Verfahren nach Anspruch 12, wobei die Verfahrensschritte des Auswählens, bzw. Eingebens des Parameterwertes und/oder des Bestätigens des ausgewählten, bzw. eingegebenen Parameterwerts mittels einer Gestensteuerung erfolgen.

14. Verfahren nach zumindest einem der vorherigen Ansprüche, wobei als Bedieneinheit (BE) ein mobiles Endgerät verwendet wird.

15. Verfahren zur Inbetriebnahme eines an einer Komponente (KO), insbesondere an einem Behälter, einer Messstelle (MS) angebrachten Feldgeräts (FG) der Automatisierungstechnik mittels einer Bedieneinheit (BE), wobei die Bedieneinheit (BE) eine Anzeigeeinheit (AE) und eine Kamera (KA) aufweist, umfassend:
- Identifizieren des Feldgeräts (FG) mittels der Bedieneinheit (BE),
- Ermitteln zumindest eines einzustellenden Parameters des Feldgeräts (FG),
- Visualisieren von dem zumindest einen einzustellenden Parameter mittels der Anzeigeeinheit (AE), wobei es sich bei der Anzeigeeinheit (BE) um ein transparentes Glas mit einem Projektor handelt, wobei die durch das Glas betrachtete Umgebung als Sichtfeld bezeichnet wird, wobei der Parameter als zumindest ein virtuelles Symbol (S_{Max}, S_{Min}, S_{M1}, S_{M2}, S_{M3}) dargestellt wird, welches virtuelle Symbol (S_{Max}, S_{Min}, S_{M1}, S_{M2}, S_{M3}) das Sichtfeld zumindest teilweise überlagert, wobei das virtuelle Symbol (S_{Max}, S_{Min}, S_{M1}, S_{M2}, S_{M3}) das Sichtfeld an derjenigen Stelle überlagert, welche die Funktion des zumindest einen einzustellenden Parameters betrifft;
- Auswählen von zumindest einem vorgegebenen Parameterwert, bzw. Eingeben von zumindest einem Parameterwert;
- Bestätigen des ausgewählten, bzw. eingegebenen Parameterwertes und
- Übermitteln des bestätigten Parameterwertes an das Feldgerät (FG) und Speichern des Parameterwertes in dem Feldgerät (FG).

## Claims

1. Procedure designed to commission a field device (FG) that is used in automation engineering and mounted on a component (KO), particularly on a vessel, of a measuring point (MS) using an operating unit (BE), wherein the operating unit (BE) has a display unit (AE) and a camera (KA), wherein said procedure comprises the following steps:
- Identification of the field device (FG) using the operating unit (BE),
- Determination of at least one parameter of the field device (FG) to be configured,
- Visualization of the at least one parameter to be configured using the display unit (AE), wherein the field of vision of an operator (BD) is presented on the display unit (AE), wherein, as the field of vision of the operator (BD), the display unit (BE) visualizes an image captured by the camera (KA) and constantly updated, wherein the parameter is displayed as at least a virtual symbol (S_{Max}, S_{Min}, M_{M1}, S_{M2}, S_{M3}), wherein the virtual symbol (S_{Max}, S_{Min}, M_{M1}, S_{M2}, S_{M3}) is at least partially superimposed on the image shown on the display unit (AE), wherein the virtual symbol (S_{Max}, S_{Min}, M_{M1}, S_{M2}, S_{M3}) is superimposed on the field of vision at the point that concerns the function of the at least one parameter to be configured;
- Selection of at least one predefined parameter value and entry of at least one parameter value;
- Confirmation of the parameter value selected or entered, and
- Transmission of the confirmed parameter value to the field device (FG) and saving of the parameter value in the field device (FG).

2. Procedure as claimed in Claim 1, wherein a reference geometry is captured using the camera (KA), wherein the reference geometry has a defined length in at least one dimension, wherein a three-dimensional polygon network is created using the reference geometry.

3. Procedure as claimed in Claim 2, wherein the three-dimensional polygon network is used to measure objects (KO, FG) captured by the camera (KA) and to define a scale for the objects (KO, FG) captured by the camera (KA) and displayed in the image.

4. Procedure as claimed in at least one of the Claims 2 or 3, wherein a vessel is used as a component (KO) of the measuring point (MS),
wherein a level transmitter that works according to a non-contact measuring procedure, particularly according to the ultrasonic measuring principle, according to the pulse transit time measuring principle, or according to the FMCW measuring principle, is used as the field device (FG) which serves to determine a fill level (h) of a product (FL) in the vessel (KO).

5. Procedure as claimed in Claim 4, wherein a maximum value of a fill level (h) of the product (FL) in the vessel (KO), a minimum value of a fill level (h) of the product (FL) in the vessel (KO) and/or an overflow protection value of a fill level (h) of the product (FL) in the vessel (KO) is configured as the parameter to be configured.

6. Procedure as claimed in Claim 4 or 5, wherein, in the event that the vessel (KO) is located in the field of vision of the operator (BD), the vessel (KO) is measured using the three-dimensional polygon network and a scale of the vessel (KO) is determined in the field of vision, and wherein the symbol (S_{ÜL}, S_{Max}, S_{Min}) of the parameter is arranged in the field of vision beside the vessel (KO).

7. Procedure as claimed in Claim 6, wherein the parameter value for the parameter is entered numerically, wherein the symbol (S_{ÜL}, S_{Max}, S_{Min}) of the parameter is arranged in the field of vision beside the vessel (KO) in such a way that it is located at a fill level (h) corresponding respectively to the numerical parameter value beside the vessel (KO).

8. Procedure as claimed in Claim 6, wherein the symbol (S_{ÜL}, S_{Max}, S_{Min}) is manually arranged beside the vessel (KO) in the field of vision, wherein a fill level (h) is determined for the symbol (S_{ÜL}, S_{Max}, S_{Min}) according to the scale of the vessel (KO) and wherein the fill level (h) is converted to a numerical parameter value.

9. Procedure as claimed in Claim 3, wherein a measuring curve (MK) of the level transmitter is recorded, wherein the measuring curve (MK) reflects an amplitude of the reflected measuring signal (SIG_{R}) as a function of a measured distance, wherein the measuring curve (MK) has at least two maxima (M1, M2, M3) which are located at a first and another fill level (h).

10. Procedure as claimed in Claim 9, wherein the first and the second fill level are displayed as symbols (S_{M1}, S_{M2}, S_{M3}) in the field of vision, wherein the symbols (S_{M1}, S_{M2}, S_{M3}) are arranged to scale at the corresponding first and second fill level (h) on the vessel (KO) visualized on the field of vision.

11. Procedure as claimed in Claim 10, wherein a product maximum of the measuring curve (MK) is configured as a parameter, wherein of the two fill levels (h), the fill level (h) that corresponds to the current actual level (h) of the product (FL) is selected as the product maximum.

12. Procedure as claimed in at least one of the previous claims, wherein smartglasses are used as the operating unit (BE).

13. Procedure as claimed in Claim 12, wherein the procedural steps to select or enter the parameter value and/or to confirm the selected or entered parameter value are performed using gesture control.

14. Procedure as claimed in at least one of the previous claims, wherein a mobile terminal is used as the operating unit (BE).

15. Procedure designed to commission a field device (FG) that is used in automation engineering and mounted on a component (KO), particularly on a vessel, of a measuring point (MS) using an operating unit (BE), wherein the operating unit (BE) has a display unit (AE) and a camera (KA), wherein said procedure comprises the following steps:
- Identification of the field device (FG) using the operating unit (BE),
- Determination of at least one parameter of the field device (FG) to be configured,
- Visualization of the at least one parameter to be configured using the display unit (AE), wherein the display unit (BE) is a transparent glass with a projector, wherein the environment seen through the glass can be referred to as a field of vision, wherein the parameter is presented as at least a virtual symbol (S_{Max}, S_{Min}, M_{M1}, S_{M2}, S_{M3}), wherein said virtual symbol (S_{Max}, S_{Min}, M_{M1}, S_{M2}, S_{M3}) is at least partially superimposed on the field of vision, wherein the virtual symbol (S_{Max}, S_{Min}, M_{M1}, S_{M2}, S_{M3}) is superimposed on the field of vision at the point that concerns the function of the at least one parameter to be configured;
- Selection of at least one predefined parameter value and entry of at least one parameter value;
- Confirmation of the parameter value selected or entered, and
- Transmission of the confirmed parameter value to the field device (FG) and saving of the parameter value in the field device (FG).

## Revendications

1. Procédé destiné à la mise en service d'un appareil de terrain (FG) de la technique d'automatisation monté sur un composant (KO), notamment sur un réservoir, d'un point de mesure (MS) au moyen d'une unité de commande (BE), l'unité de commande (BE) présentant une unité d'affichage (AE) et une caméra (KA), lequel procédé comprend les étapes suivantes:
- Identification de l'appareil de terrain (FG) au moyen de l'unité de commande (BE),
- Détermination d'au moins un paramètre à régler de l'appareil de terrain (FG),
- Visualisation de l'au moins un paramètre à régler au moyen de l'unité d'affichage (AE), le champ de vision d'un opérateur (BD) étant représenté sur l'unité d'affichage (AE), l'unité d'affichage (BE) visualisant, en tant que champ de vision de l'opérateur (BD), une image constamment actualisée, saisie par la caméra (KA), le paramètre étant représenté sous la forme d'au moins un symbole virtuel (S_{Max}, S_{Min}, M_{M1}, S_{M2}, S_{M3}), lequel symbole virtuel (S_{Max}, S_{Min}, M_{M1}, S_{M2}, S_{M3}) se superpose au moins partiellement à l'image affichée sur l'unité d'affichage (AE), le symbole virtuel (S_{Max}, S_{Min}, M_{M1}, S_{M2}, S_{M3}) se superposant au champ de vision à l'endroit qui concerne la fonction de l'au moins un paramètre à régler ;
- Sélection d'au moins une valeur de paramètre prédéfinie ou saisie d'au moins une valeur de paramètre ;
- Confirmation de la valeur de paramètre sélectionnée ou saisie, et
- Transmission de la valeur de paramètre confirmée à l'appareil de terrain (FG) et enregistrement de la valeur de paramètre dans l'appareil de terrain (FG).

2. Procédé selon la revendication 1, pour lequel une géométrie de référence est saisie au moyen de la caméra (KA), la géométrie de référence présentant une longueur définie dans au moins une dimension, un réseau de polygones tridimensionnel étant créé à l'aide de la géométrie de référence.

3. Procédé selon la revendication 2, pour lequel le réseau de polygones tridimensionnel est utilisé pour mesurer des objets (KO, FG) détectés par la caméra (KA) et pour définir une échelle pour les objets (KO, FG) détectés par la caméra (KA) et affichés sur l'image.

4. Procédé selon au moins l'une des revendications 2 ou 3, pour lequel on utilise comme composant (KO) du point de mesure (MS) un réservoir,
procédé pour lequel on utilise comme appareil de terrain (FG) un transmetteur de niveau qui fonctionne selon un procédé de mesure sans contact, notamment selon le principe de mesure par ultrasons, selon le principe de mesure du temps de transit des impulsions, ou selon le principe de mesure FMCW, qui sert à déterminer une hauteur de remplissage (h) d'un produit (FL) dans le réservoir (KO).

5. Procédé selon la revendication 4, pour lequel on règle comme paramètre à régler une valeur maximale d'une hauteur de remplissage (h) du produit (FL) dans le réservoir (KO), une valeur minimale d'une hauteur de remplissage (h) du produit (FL) dans le réservoir (KO) et/ou une valeur de protection contre le débordement d'une hauteur de remplissage (h) du produit (FL) dans le réservoir (KO).

6. Procédé selon la revendication 4 ou 5, pour lequel, dans le cas où le réservoir (KO) se trouve sur le champ de vision de l'opérateur (BD), le réservoir (KO) est mesuré à l'aide du réseau de polygones tridimensionnel et une échelle du réservoir (KO) est déterminée sur le champ de vision, et le symbole (S_{ÜL}, S_{Max}, S_{Min}) du paramètre étant placé sur le champ de vision à côté du réservoir (KO).

7. Procédé selon la revendication 6, pour lequel la valeur du paramètre est entrée numériquement pour le paramètre, le symbole (S_{ÜL}, S_{Max}, S_{Min}) du paramètre étant disposé sur le champ de vision à côté du réservoir (KO) de telle sorte qu'il se trouve à une hauteur de remplissage (h) correspondant respectivement à la valeur numérique du paramètre à côté du réservoir (KO).

8. Procédé selon la revendication 6, pour lequel le symbole (S_{ÜL}, S_{Max}, S_{Min}) est disposé manuellement à côté du réservoir (KO) sur le champ de vision, une hauteur de remplissage (h) étant déterminée pour le symbole (S_{ÜL}, S_{Max}, S_{Min}) en fonction de l'échelle du réservoir (KO) et une conversion de la hauteur de remplissage (h) en une valeur numérique de paramètre étant effectuée.

9. Procédé selon la revendication 3, pour lequel une courbe de mesure (MK) du transmetteur de niveau est enregistrée, laquelle courbe de mesure (MK) reflète une amplitude du signal de mesure réfléchi (SIG_{R}) en fonction d'une distance de mesure, la courbe de mesure (MK) présentant au moins deux maxima (M1, M2, M3) qui se trouvent à une première et à une autre hauteur de remplissage (h).

10. Procédé selon la revendication 9, pour lequel la première et la deuxième hauteur de remplissage sont affichées sous forme de symboles (S_{M1}, S_{M2}, S_{M3}) sur le champ de vision, les symboles (S_{M1}, S_{M2}, S_{M3}) étant disposés à l'échelle sur le réservoir (KO) visualisé sur le champ de vision sur la première et la deuxième hauteur de remplissage (h) correspondantes.

11. Procédé selon la revendication 10, pour lequel on règle comme paramètre un maximum de produit de la courbe de mesure (MK), en choisissant comme maximum de produit celle des deux hauteurs de remplissage (h) qui correspond à la hauteur actuelle réelle (h) du produit (FL).

12. Procédé selon au moins l'une des revendications précédentes, pour lequel des lunettes de données sont utilisées comme unité de commande (BE).

13. Procédé selon la revendication 12, pour lequel les étapes de procédé de sélection ou de saisie de la valeur de paramètre et/ou de confirmation de la valeur de paramètre sélectionnée ou saisie, sont effectuées au moyen d'une commande gestuelle.

14. Procédé selon au moins l'une des revendications précédentes, pour lequel un terminal mobile est utilisé comme unité de commande (BE).

15. Procédé destiné à la mise en service d'un appareil de terrain (FG) de la technique d'automatisation monté sur un composant (KO), notamment sur un réservoir, d'un point de mesure (MS) au moyen d'une unité de commande (BE), l'unité de commande (BE) présentant une unité d'affichage (AE) et une caméra (KA), lequel procédé comprend les étapes suivantes :
- Identification de l'appareil de terrain (FG) au moyen de l'unité de commande (BE),
- Détermination d'au moins un paramètre à régler de l'appareil de terrain (FG),
- Visualisation de l'au moins un paramètre à régler au moyen de l'unité d'affichage (AE), l'unité d'affichage (BE) étant un verre transparent avec un projecteur, l'environnement observé à travers le verre étant appelé champ de vision, le paramètre étant représenté sous la forme d'au moins un symbole virtuel (S_{Max}, S_{Min}, M_{M1}, S_{M2}, S_{M3}), lequel symbole virtuel (S_{Max}, S_{Min}, M_{M1}, S_{M2}, S_{M3}) se superpose au moins partiellement au champ de vision, le symbole virtuel (S_{Max}, S_{Min}, M_{M1}, S_{M2}, S_{M3}) se superposant au champ de vision à l'endroit qui concerne la fonction de l'au moins un paramètre à régler ;
- Sélection d'au moins une valeur de paramètre prédéfinie ou saisie d'au moins une valeur de paramètre ;
- Confirmation de la valeur de paramètre sélectionnée ou saisie, et
- Transmission de la valeur de paramètre confirmée à l'appareil de terrain (FG) et enregistrement de la valeur de paramètre dans l'appareil de terrain (FG).
